# EUROPEAN PATENT SPECIFICATION

(11) **EP 3 990 513 B1**
(45) Date of publication and mention of the grant of the patent: **04.03.2026**
(21) Application number: 20734550.5
(22) Date of filing: 26.06.2020
(51) Int. Cl.: C08G 18/24, C08G 18/42, C08G 18/67, C08G 18/75, C08L 75/14, C08L 75/16, C08G 18/44, C09D 175/14, C09D 175/16

(54) **CURABLE COMPOSITIONS WITH OUTDOOR PERFORMANCES**
HÄRTBARE ZUSAMMENSETZUNGEN MIT AUSSENLEISTUNGEN
COMPOSITIONS DURCISSABLES À PERFORMANCES EXTÉRIEURES

(30) Priority: 27.06.2019 EP 19182940
(43) Date of publication of application: 04.05.2022
(73) Proprietor: Allnex Belgium, S.A., 1620 Drogenbos (BE)
(72) Inventor: VAN HOLEN, Jurgen, 9400 Ninove (BE); VANMEULDER, Guido, 1651 Lot (BE)
(74) Representative: Neirynck, Katrien Gerda Noëlla
(86) International application number: PCT/EP2020/068062
(87) International publication number: WO 2020/260608

(56) References cited:
- WO-A1-2009/036847
- WO-A1-2016/089271
- JP-A- 2008 056 823

## Description

### FIELD OF THE INVENTION

The present invention generally relates to gel coat finish layers.

### BACKGROUND OF THE INVENTION

Light-weight composites are commonly used in manufacturing many items, especially substrates comprising fiber reinforced composites.

To obtain a reasonable surface appearance, a coating, often named as "gel coat", is applied over a supporting substrate comprising fibers. Parts can be produced to have a finish bearing any desired color originally carried by the gel coat. However, attainment of a gel coat surface with a suitably smooth finish remains a challenge.

It is desirable to produce a pigmented gel coat, so as to eliminate the need of painting, and to provide good protection against fading due to heat and ultraviolet radiation if the substrate is exposed to sun radiations such as outdoor exposed substrates are. A particular challenge is to produce a surface finish on the gel coat that is both defect free and highly resistant to degradation from exposure to ultraviolet radiation. WO2004/015004 describes gel coat compositions based on aliphatic polyester polyols and aliphatic polyisocyanates.

Therefore, it is desirable to improve the surface appearance of the gel coat, and provide a part that will maintain color and high gloss when exposed to outdoor circumstances.

WO2016/089271 discloses radiation curing composition. WO2009/036847 discloses low VOC thermosetting composition of polyester acrylic resin for gel coat.

### SUMMARY OF THE INVENTION

In one aspect, the invention provides a gel coat suitable as a finish for a composite article. The gel coat layer contains a urethane acrylate resin, and in a preferred embodiment is pigmented. In a preferred embodiment, the gel coat further comprises an ultraviolet inhibitor package and viscosity control agents to control sag and surface appearance. A gel coat composition can be produced that on curing yields a surface having a good surface finish and gloss retention of more than 60% when exposed to UV radiation according to the procedure detailed below. The gel coat preferably provides a suitable surface finish to a supporting substrate.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The invention provides a radiation curable gel coat composition for fibers reinforced substrates, comprising a gel coat resin and at least one diluent monomer (B),
wherein the gel coat resin comprises urethane (meth)acrylate reaction products (A) of a reaction mixture comprising:
   (a) a hydroxy-terminated polyol having a weight average molecular weight of about 200 to about 4000, this polyol being a polycaprolactone polyol or a [(poly)carbonate-(poly)caprolactone]polyol;
   (b) a diisocyanate; and
   (c) a hydroxyalkyl (meth)acrylate, wherein the polycaprolactone polyol is prepared from reacting one or more saturated polyol(s) with ε-caprolactone, wherein the saturated polyol is an alkyl polyol; wherein the [(poly)carbonate-(poly)caprolactone]polyol is prepared from reacting one or more saturated polyol(s) with ε-caprolactone, wherein the saturated polyol is a polycarbonatediol;
and wherein both the diluent monomer (B) and the reaction product (A) contain polymerizable ethylenic unsaturated groups, preferably (meth)acrylate groups.

Preferably, compound (a) has a weight average molecular weight of about 500 to about 3000. Preferably, a reaction mixture of (a), (b), and (c) contains a molar ratio of about 0.75 to about 1.25 mole (a) to about 1.5 to about 2.5 moles (b) to about 1.5 to about 2.5 moles (c), preferably a molar ratio of about 0.9 to about 1.1 mole (a) to about 1.7 to about 2.2 moles (b) to about 1.7 to about 2.2 moles (c), more preferably a molar ratio of about 0.95 to about 1.05 mole (a) to about 1.7 to about 2 moles (b) to about 1.7 to about 2 moles (c).

Preferably, compound (b) comprises an aliphatic diisocyanate and optionally up to 20% of an aromatic diisocyanate, by total weight of the diisocyanate, the aliphatic diisocyanate comprising preferably 1,6-hexamethylene diisocyanate, isophorone diisocyanate, 2,4'-dicyclohexylmethane diisocyanate, and/or 4,4'-dicyclohexylmethane diisocyanate more preferably isophorone diisocyanate (IPDI).

Preferably, compound (c) has a structure

CH₂=C(R¹)-C(=O)-O-R²-OH

wherein R1 is hydrogen or methyl and R² is a C1 to C6 alkylene group or an arylene group, preferably 2-hydroxyethyl methacrylate, 2-hydroxyethyl acrylate, 2-hydroxypropyl methacrylate, or 3-hydroxypropyl methacrylate, more preferably 2-hydroxyethyl acrylate (HEA).

Preferably, the polycaprolactonepolyol comprises a reaction of product of (i) neopentyl glycol, 1,6-hexanediol, or a mixture thereof, and (ii) ε-caprolactone.

Preferably, the urethane (meth)acrylate is present in the gel coat resin composition in an amount of about 20% to about 80%, preferably 30 to 70% by weight, of the composition. Preferably, the composition further comprises a pigment.

Preferably, the diluent monomer comprises an acrylate monomer, preferably difunctional or trifunctional, more preferably isobornyl(meth)acrylate, hexanediol di(meth)acrylate, trimethylolpropanetri(meth)acrylate or a mixture thereof.

The invention also provides a cured gel coat prepared by curing a gel coat composition as defined above.

Preferably, the composition contains a photoinitiator and is cured by ultraviolet radiation. Preferably, the composition is cured by electron beam.

Preferably, the composition contains a peroxide and is peroxide cured.

The invention also provides an article of manufacture having an exterior gel coat prepared by curing a gel coat composition as defined above.

The invention also provides a gel coat composition comprising a gel coat resin and at least one diluent monomer, wherein the gel coat resin comprises urethane(meth)acrylate reaction product made by a process comprising the steps of
(a) preparing a hydroxy-terminated polycaprolactonepolyol, and/or a hydroxy-terminated [(polycaprolactone)(polycarbonate)]polyol having a weight average molecular weight of about 200 to about 4000 by reacting (i) a saturated diol and optional saturated polyol with ε-caprolactone, in sufficient relative amounts of (i) and (ii) to provide terminal hydroxy groups;
(b) adding a hydroxyalkyl (meth)acrylate to the hydroxy-terminated polyol of step (a) to form a prereaction mixture;
(c) then adding a diisocyanate to the prereaction mixture of step (b) to form a reaction mixture; and
(d) maintaining the reaction mixture of step (c) at a sufficient temperature for a sufficient time to react essentially all isocyanate moieties of the diisocyanate and yield the urethane acrylate gel coat resin.

### DETAILED DESCRIPTION OF THE PREFERRED EMBODIMENTS

The substrate provides most of the strength of the composite article. The gel coat layer may be pigmented. It is used to provide an aesthetic appearance to the composite article.

Composite articles comprising the gel coat of the invention can be prepared by conventional processes. For example, a gel coat composition may be spread across the surface of a mold by any one of a number of conventional techniques, e.g., brushing, hand lay-up, or spraying, and usually as a relatively thick layer, e.g., 0.1 to 0.5 mm, to maximize its weather and wear resistance, and if the molded article is fiber-reinforced, to help mask the fiber reinforcement pattern which can appear through the gel coat due to inherent resin shrinkage that occurs around the fibers during cure. After the gel coat is applied to the surface of the mold, it is at least partially cured. A plastic, optionally fiber-reinforced, then is applied to the partially or fully cured gel coat by any one of a number of conventional techniques, and the resulting laminate structure containing gel coat and substrate are cured. Advantageously, the gel coat cures on the substrate at a temperature of 50°C or less. The cure is typically obtained through the use of free radical polymerization processes by exposure to UV radiation or EB radiation. The cure can alternatively be obtained by peroxide curing.

Gel coats of the invention are based on a specific class of urethane acrylate resins. The main ingredients of the gel coats are resin, pigment paste, diluent monomers, additives, and initiator, each of which will be further discussed below. In a preferred embodiment, the gel coats of the invention retain a gloss of 60-70%, no visible cracks appear and the colors stays consistent during the Xenon accelerated weathering test.

The gel coat compositions typically contains from 30-80% of resin, preferably 40-60% resin, based on the total weight of the composition. The gel coat composition may contain pigment.

When present, the pigment is typically present as a pigment paste, wherein the pigment paste is in the range of about 2-30% by weight of the total composition. In preferred embodiments, the pigment paste is present at from 5-20% by weight. Diluent monomers can be present in the gel coat composition at a range of about 10% to about 50% by weight of the composition, preferably from about 20% to about 50%. Additives make up the remainder of the composition. Such additives include, without limitation, dispersing agents, defoamers, ultraviolet light stabilizers, thixotropic agents, and the like. In addition, the compositions include up to 3% by weight of a photoinitiator capable of initiating free radical polymerization of the monomers and the resins to cure the resin.

In one aspect, the resin of the gel coat is based on a urethane (meth)acrylate resin containing a polyurethane polymer with olefin functionality at the ends of the polymer. Preferred resins contain urethanes, or polyurethanes, end capped with (meth)acrylic based monomers, especially urethanes. Surprisingly, it was found that a gel coat being a reaction product of (a) a polycaprolactone polyol, or [(polycaprolactone)(polycarbonate)]polyol with a weight average molecular weight (M_{w}) about 200 to about 4000, (b) a diisocyanate, and (c) a hydroxyalkyl (meth)acrylate as defined in claim 1, provides good performances in accelerated outdoor tests.

A urethane-(meth)acrylate gel coat resin of the present invention has an idealized structure (I)

C-B-A-B-C, (I)

wherein (I) is the reaction product of a polycaprolactonepolyol, or [(polycaprolactone)(polycarbonate)]polyol having M_{w} of about 200 to about 4,000 (A), a diisocyanate (B), and a hydroxyalkyl (meth)acrylate (C). A urethane (meth)acrylate gel coat resin of the present invention is a reaction product of A, B, and C, thus other reactions species generally are present in addition to a resin of idealized structure (I).

In accordance with an important feature of the present invention, **as** defined in claim 1, a present urethane acrylate gel coat resin contains a polycaprolactonepolyol, or [(polycaprolactone)(polycarbonate)]polyol of M_{w} about 200 to about 4000 that is reacted with a diisocyanate, and the resulting urethane product is end-capped with a hydroxyalkyl (meth)acrylate. The urethane (meth)acrylate resin therefore contains terminal vinyl groups available for free radical polymerization, typically using a photoinitiator or a peroxide catalyst. Another option is to cure the product through EB radiation.

The individual ingredients used in the manufacture of a present urethane (meth)acrylate gel coat resin are described in more detail below.

### (a) a polycaprolactonepolyol, or [(polycaprolactone)(polycarbonate)]polyol

The polyol component (a) of a present urethane acrylate gel coat resin preferably has a weight average molecular weight of about 200 to about 4000. These polyols can be made according to prior art. Many different grades are commercially available on the market.

Polycaprolactonepolyols are commercialized under the tradenames CAPA from Ingevity or PLACCEL from Daicel Corporation. Mixed polycarbonate/polycaprolactone polyols are available from Covestro under the brandname of Desmophen. Examples are Desmophen C 1100 and 1200.

The manufacturing of polycarbonatepolyols is known in the art. They can be prepared from one or more saturated polyols and one or more carbonates and/or phosgene.

Non-limiting examples of polyols used to prepare the polycarbonatepolyol include ethylene glycol, diethylene glycol, tri ethylene glycol, propylene glycol, dipropylene glycol, 1,6-hexanediol, 1,3-butylene glycol, 1,4-butylene glycol, neopentyl glycol, cyclohexanedimethanol, 1,5-pentanediol, 2,2-dimethyl-1,3-propanediol, 2,2-ethylbutyl-1,3-propanediol, isopropylidene bis(p-phenyleneoxypropanol-2), a polyethylene or polypropylene glycol, glycerol and trimethylolpropane, ethoxylated, propoxylated or a mixed ethoxylated/propoxylated trimethylolpropane.

Non-limiting examples of carbonates are dimethylcarbonate, diethylcarbonate, diphenylcarbonate, ethylenecarbonate or propylenecarbonate.

Polycaprolactone polyols and [(polycaprolactone)(polycarbonate)]polyol are prepared from reacting one or more saturated polyol(s) with ε-caprolactone. 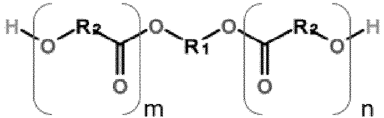 R1 is derived from an alkyl polyol or derived from a polycarbonatediol, R2 is -(CH₂)₅-

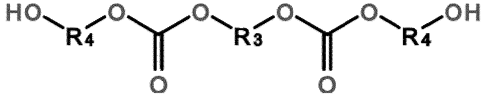

### Example of a polycarbonatediol

The polyol and ε-caprolactone, in correct proportions, are interacted under standard esterification procedures to provide the necessary M_{w}, molecular weight distribution, branching, and hydroxy-terminated functionality for use in a present urethane acrylate gel coat resin.

R3 and R4 are alkyl rests of the starting diol. They may be the same or different, and present in various ratios in the structure.

Polycarbonatediols can also be used to prepare polycarbonatecaprolactonepolyols.

Preferred are the alkyl polyols, wherein the alkyl comprises 2-24 carbon atoms, preferably 2-12 carbon atoms, such as 1,6-hexanediol, 1,3-butylene glycol, 1,4-butylene glycol, , cyclohexanedimethanol, 1,5-pentanediol, 3-methyl-1,5-pentanediol and 2,2-dimethyl-1,3-propanediol (neopentyl glycol).

As used herein, the terms "polyol" is defined as a compound that contains two or more, and typically two to four, hydroxy (OH) groups, or two or more, typically two or three, hydroxy (OH) groups, respectively.

The polycaprolactonepolyols and [(polycaprolactone)(polycarbonate)]polyol are hydroxy terminated to provide reactive moieties for a subsequent reaction with a diisocyanate.

The polycaprolactonepolyols and [(polycaprolactone)(polycarbonate)]polyols typically have a M_{w} of about 200 to about 4000, more preferably about 400 to about 3500, and most preferably about 500 to about 3000. Accordingly, the polyols have low molecular weight.

A polycarbonate polyol can be obtained from reaction of one (OH-R³-OH) or 2 different diols (OH-R¹-OH, OH-R²-OH) on a carbonate reactant (RO-C(=O)-OR).

### (b) Diisocyanate

The diisocyanate component (b) of a present urethane acrylate gel coat resin is an aliphatic diisocyanate. The diisocyanate component optionally can contain up to about 20%, and preferably up to about 10%, by total weight of the diisocyanate, of an aromatic diisocyanate. The identity of the aliphatic diisocyanate is not limited, and any commercially available commercial or synthetic diisocyanate can be used in the manufacture of a urethane acrylate gel coat resin of the present invention.

Non-limiting examples of aliphatic diisocyanates include 1,6-hexamethylene diisocyanate, isophorone diisocyanate, 1,4-cyclohexane diisocyanate, 2,4'-dicyclohexylmethane diisocyanate, 4,4'-dicyclohexylmethane diisocyanate, 1,3-bis-(isocyanatomethyl)cyclohexane, I,4-bis(isocyanatomethyl)cyclohexane, tetramethylxylylene diisocyanate, 1,11 -diisocyanatoundecane, 1,12-diisocyanatododecane, 2,2,4-trimethyl- 1,6-diisocyanatohexane, 2,4,4-trimethyl- 1,6-diisocyanatohexane, 1,2-bis(isocyanatomethyl)cyclobutane, hexahydro-2,4-diisocyanatotoluene, hexhydro-2,6-diisocyanatotoluene, 1 -isocyanato-2-isocyanatomethyl cyclopentane, I-isocyanato-3-isocyanatomethyl-3,5,5-trimethyl cyclohexane, I-isocyanato-4-isocyanatomethyl-I -methyl cyclohexane, I-isocyanato-3-isocyanatomethyl-1 -methyl cyclohexane, and mixtures thereof. A preferred aliphatic diisocyanate is isophorone diisocyanate.

Non-limiting examples of optional aromatic diisocyanates includes toluene 2,4-diisocyanate, toluene 2,6-diisocyanate, 4,4'-methylene diphenyl diisocyanate, 2,4'-methylene diphenyl diisocyanate, polymeric methylene diphenyl diisocyanate, p-phenylene diisocyanate, naphthalene- 1,5-diisocyanate, and mixtures thereof.

### (c) Hydroxyalkyl (meth)acrylate

The hydroxyalkyl (meth)acrylate component (c) of a present urethane acrylate gel coat resin is preferably a mono hydroxyalkyl ester of an α,β-unsaturated acid, or anhydride thereof. Suitable α,/β-unsaturated acids include a monocarboxylic acid such as, but not limited to, acrylic acid, methacrylic acid, ethacrylic acid, α-chloroacrylic acid, β-methylacrylic acid (crotonic acid), -phenylacrylic acid and mixtures thereof. As used throughout this specification, the term "(meth)acrylate" is an abbreviation for acrylate and/or methacrylate.

A preferred acrylate monomer containing a hydroxy group is a hydroxyalkyl (meth)acrylate having the following structure: 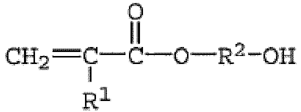 wherein R is hydrogen or methyl, and R is a to C₆ alkylene group or an arylene group. For example, R² can be, but is not limited to (-CH -)ₙ, wherein n is 2 to 6, or any other structural isomer of an alkylene group containing three to six carbon atoms, or can be a cyclic C₃-C₆ alkylene group. R² also can be an arylene group like phenylene (i.e., C₆EU) or naphthylene (i.e., C₁₀H₆). R² optionally can be substituted with relatively non-reactive substituents, like Ci-Cβ alkyl, halo (i.e., Cl, Br, F, and I), phenyl, alkoxy, and aryloxy (i.e., an OR² substituent).

Specific examples of monomers containing a hydroxy group are the hydroxy(C₁-C₆)alkyl (meth)acrylates, e.g., 2-hydroxyethyl methacrylate, 2-hydroxyethyl acrylate, 2-hydroxypropyl methacrylate, and 2-hydroxypropyl acrylate.

The relative amounts of (a), (b), and (c) used in the manufacture of a urethane acrylate gel coat resin of the present invention are sufficient to provide a reaction product having an idealized structure (I). Accordingly, component (a) is used in a molar amount of about 0.75 to about 1.25, and preferably about 0.9 to 1.1 moles; component (b) is used in an amount of 1.5 to about 2.5, and preferably about 1.7 to about 2.2 moles; and component (c) is used in an amount of about 1.5 to about 2.5, and preferably about 1.7 to about 2.2 moles. To achieve the full advantage of the present invention, the mole ratio of (a):(b):(c) is 1:1.7-2:1.75-2.

An urethane acrylate gel coat resin of the present invention is manufactured by first preparing the polycaprolactonepolyol or the [(polycaprolactone)(polycarbonate)]polyol. The polycaprolactonepolyol and the [(polycaprolactone)(polycarbonate)]polyol can be prepared from a polyol, predominantly or completely a diol such as a polycarbonate diol, and ε-caprolactone, using standard esterifying condensation conditions. The amounts and relative amounts of polyol and ε-caprolactone are selected, and reaction conditions are used, such that the polycaprolactonepolyol preferably has an M_{w} of about 200 to about 4000 and is hydroxy terminated. The polycaprolactonepolyol can be saturated or unsaturated. Preferably the polycaprolactone polyol is saturated.

The polycaprolactonepolyol or the [(polycaprolactone)(polycarbonate)]polyol then is blended with the hydroxyalkyl (meth)acrylate, followed by addition of the diisocyanate.

The resulting reaction leads to a mixture of products, including a species having the idealized structure (I). Structure (I) has terminal acrylate moieties available for polymerization using standard free radical techniques.

In embodiments, the composition may comprise a photoinitiator. The curing of the composition can be performed with or without the use of photoinitiators. Typically, the compositions of the invention comprise at least one photoinitiator. Any photoinitiator or mixtures thereof capable of generating free radicals when exposed to radiation may be used. Preferred photoinitiators include benzophenones, benziketals, or acyl phosphine oxides. Preferred photoinitiators are available as Omnirad by IGM), ADDITOL^{®} photoinitiators available from allnex, or Speedcure photoiniators from Lambson Ltd.

When present, the amount of photoinitiators in the composition of the second aspect is typically from 0.01 to 10 wt%, preferably from 1 to 8 wt%, more preferably from 3 to 5 wt% relative to the total weight of the composition.

In some embodiments, the composition may comprise inhibitors. Examples of suitable inhibitors include but are not limited to phenolic inhibitors such as hydroquinone (HQ), methyl hydroquinone (THQ), tert-butyl hydroquinone (TBHQ), di-tert-butyl hydroquinone (DTBHQ), hydroquinone monomethyl ether (MEHQ), 2,6-di-tert-butyl-4-methylphenol (BHT) phenothiazine (PTZ) and the like. When present, inhibitors are preferably present in an amount up to 0.5wt%, in particular from 0.0001 to 0.2 wt%, and preferably from 0.01 to 0.1 wt% of the composition.

They may also include phosphines, like triphenylphosphine (TPP) and other materials such as tris-nonylphenylphosphite (TNPP) and triphenyl antimony (TPS).

In embodiments, the composition may further comprise a UV absorber and/or a hindered amine light stabilizer. The UVAs protect the polymers by absorbing destructive UV radiation, while the HALS material protects by reacting with the free radicals that occur after a high-energy UV photon breaks a chemical bond in a polymer.

Examples of UVAs are benzotriazoles such as Tinuvin^{®} 328, Tinuvin^{®} 1130, Tinuvin^{®} 900, Tinuvin^{®} 99-2, and Tinuvin^{®} 384-2, triazines such as Tinuvin^{®} 400, Tinuvin^{®} 405, Tinuvin^{®} 460, Tinuvin^{®} 477, and Tinuvin^{®} 479, and benzophenones such as Tinuvin^{®} 531.

Examples of HALS are Tinuvin^{®} 123, Tinuvin^{®} 144, and Tinuvin^{®} 292, 2,2,6,6-tetramethylpiperidine and 2,6-di-tert-butylpiperidine.

The sum of UV absorbers and HALS, when present, may be used in an amount of from 0.1 to 5.0, preferably from 0.5 to 3 wt % of the composition.

In embodiments, the composition of the second aspect may further include one or more reactive diluents. The reactive diluents are radiation curable unsaturated compounds. They can be used to reduce the viscosity of the composition.

Reactive diluents comprise at least one radiation curable unsaturation such as an allyl group, a vinyl group, or a (meth)acryloyl group. Reactive diluents typically are (meth)acrylated monomers. They are for example selected from mono-, di-, tri- and poly (meth)acrylates. Herein, a poly (meth)acrylate is a compound having more than three reactive (meth)acrylate groups.

Preferably the viscosity of reactive diluents used is in the range of from 5 mPa.s to 2 Pa.s at a temperature of 25°C and most preferably it is <500 mPa.s.

In embodiments, enough reactive diluents are present in the coating composition to decrease its viscosity below 50 Pa.s, preferably below 40 Pa.s, more preferably below 30 Pa.s. Preferably the reactive diluents used have a number average molecular weight (Mn) in the average range of from 100 to 1000 Daltons, more preferably 200 to 800 Daltons and most preferably 200 to 500 Daltons. Typically, the weight average molecular weight (MW) is at most 1000 Daltons.

An example of suitable (meth)acrylated monomer are alkyl (meth)acrylates represented by a formula CH₂=C(R¹)COOC_{z}H_{2z+1}, wherein R¹ is a hydrogen atom or a methyl group, and z is an integer of from 1 to 13, wherein C_{z}H_{2z+1} may have a straight chain structure or a branched chain structure. Suitable examples of suitable reactive diluents may include but are not limited to: allyl (meth)acrylate, benzyl (meth)acrylate, butoxyethyl (meth)acrylate, butanediol di(meth)acrylate, butoxytriethylene glycol mono (meth)acrylate, t-butylaminoethyl (meth)acrylate, 3-chloro-2-hydroxypropyl (meth)acrylate, 2-cyanoethyl (meth)acrylate, cyclohexyl (meth)acrylate, 2, 3-dibromopropyl (meth)acrylate, dicyclopentenyl (meth)acrylate, N, N-diethylaminoethyl (meth)acrylate, N, N-dimethylaminoethyl (meth)acrylate, 2-ethoxyethyl (meth)acrylate, 2-(2-ethoxyethoxy) ethyl (meth)acrylate, 2-ethylhexyl (meth)acrylate, glycerol (meth)acrylate, glycidyl (meth)acrylate, heptadecafluorodecyl (meth)acrylate, 2-hydroxyethyl (meth)acrylate, 2-hydroxy-3- (meth)acryloyloxypropyltrimethylammonium chloride, 2-hydroxypropyl (meth)acrylate, [gamma] - (meth)acryloxypropyltrimethoxysilane, 2-methoxyethyl (meth)acrylate, methoxydiethylene glycol (meth)acrylate, methoxytriethylene glycol (meth)acrylate, methoxytetraethylene glycol (meth)acrylate, methoxydipropylene glycol (meth)acrylate, methoxylated cyclodecatriene (meth)acrylate, morpholine (meth)acrylate, nonylphenoxypolyethylene glycol (meth)acrylate, nonylphenoxypolypropylene glycol (meth)acrylate, octafluoropentyl (meth)acrylate, phenoxyhydroxypropyl (meth)acrylate, phenoxyethyl (meth)acrylate, phenoxydiethylene glycol (meth)acrylate, phenoxytetraethylene glycol (meth)acrylate, phenoxyhexaethylene glycol (meth)acrylate, phenoxy (meth)acrylate, polypropylene glycol (meth)acrylate, sodium 2-sulfonate ethoxy (meth)acrylate, tetrafluoropropyl (meth)acrylate, tetrahydrofurfuryl (meth)acrylate, trifluoroethyl (meth)acrylate, hexafluoroisopropyl acrylate, vinyl acetate, N-vinyl caprolactam, N-vinylpyrrolidone, dicyclopentadienyl (meth)acrylate, and isobornyl (meth)acrylate (IBO(M)A.

Preferred however are monomers with at least 2, more preferably at least 3 polymerizable functional groups such as (meth)acryloyl groups. Examples of poly-unsaturated compounds from this category are trimethylolpropane tri-(meth)acrylate (TMPT(M)A), 1,6-hexanediol di(meth)acrylate (HDD(M)A), glycerol tri-(meth)acrylate, pentaerythritol tri, tetra-(meth)acrylate, pentaerythritol tetra-(meth)acrylate, di-trimethylolpropane tetra-(meth)acrylate, di-pentaerythritol hexa-(meth)acrylate and their (poly) ethoxylated and/or (poly) propoxylated equivalents, as well as mixtures thereof. The acrylated forms hereof are preferred over methacrylated forms. Most preferred are di-and/or tri-acrylates.

Reactive diluents e are preferably included in a proportion of 0.01 to 90 wt%, in particular from 0.5 to 75 wt%, in particular from 10 to 60 wt% of the composition.

The gel coat compositions may contain an initiator capable of initiating cure of the gel coat by a free radical polymerization mechanism at temperatures of about 50°C or lower. Preferably, the initiator is capable of initiating cure at room temperature, or about 20-30°C. Generally, the initiator includes both an initiator compound and an activator or promoter. The initiator and activator work in combination to initiate cure at a desired processing temperature. Preferred initiators include various organic peroxides and peracids. Examples of initiators that initiate cure at a temperature of about 50°C or less include, without limitation, benzoyl peroxide, methyl ethyl ketone hydroperoxide (MEKP), and cumene hydroperoxide. In a preferred embodiment, methyl ethyl ketone hydroperoxide is used in a level of about 1-3% Oxygen. Activators such as cobalt octoate, cobalt 2-ethylhexanoate, and cobalt naphthenate are suitable for working with the methyl ethyl ketone hydrogen peroxide to initiate cure. Non-cobalt containing promoters such as dimethylacetoacetamide may also be used, in a preferred embodiment, the gel coat compositions contain up to 1% of a cobalt containing promoter and up to 1% of a non-cobalt containing promoter such as dimethylacetoacetamide.

To prepare the gel coat compositions, the additives may be added in sequence to the resin with stirring. Thereafter the pigment paste may be added. The mixture is mixed thoroughly, filtered and stored in a drum. Thus, the invention provides a gel coat layer comprising a resin suitable for use in relatively low temperature curing processes.

The invention has been described above with respect to preferred embodiments. Further non-limiting examples are given in the examples that follow.

### EXAMPLES

The following abbreviations are used in the Examples:
DBTDL Dibutyltin dilaurate
HEA 2-hydroxyethylacrylate
IPDI isophorone diisocyanate
HALS hindered amine light stabilizer
HDDA 1,6-hexanediol diacrylate
MEHQ :4-methoxyphenol
BHT:2,6-Di-tert-butyl-4-methylphenol
TPO-L : Ethyl (2,4,6-trimethylbenzoyl) phenyl phosphinate
Pigment MB : HDDA / EBECRYL 331 / Kronos 2160
Additol XL 6507 : additives available from allnex
Additol Lambda : additives available from allnex
BYK 346 : additive available from Byk
Tinuvin 292 : Light stabilizer from BASF
Tinuvin 1130: UV light absorber additive from BASF
Curox I-300 is Methyl isobutyl ketone peroxide available from United Initiators
Oligoester : polyester polyol made from a polyol and polyacid
Polycaprolactone diol is typically CAPA 2054 from Ingevity. Polycaprolactone diol of MW 550, OH value 204 mg KOH/g

### EXAMPLE 1

Polycaprolactonediol (400 parts) was added into a flask equipped with an agitator, and the mixture was melted. Next, the reactor was sparged using one part air and 2 part nitrogen as a blanket. Next, DBTDL (0.03 parts), BHT (0.05 wt. parts), HEA (150 parts), and IPDI (320 parts) were added to the polyol. The IPDI was added at a rate such that the exothermic reaction was maintained below 80°C (e.g., over about 30-60 minutes). The reaction was continued for 2 to 3 hours, periodically testing for free isocyanate groups (% NCO). A % NCO of less than 0.3 is preferred. At the completion of the reaction, MEHQ (0.03 wt. parts) and HDDA (150 parts) were added slowly to the urethane acrylate resin at a temperature below 90°C. The resulting mixture was than cooled down while stirring to 60°C for at least one hour. The resulting product contained about 85 % urethane acrylate resin and about 15% HDDA monomer.

### Example 2* (Comparative)

### Synthesis of oligoester

Butanediol (84 parts) and adipic acid (100 parts) were added in a reactor equipped with an agitator and the mixture is covered with a nitrogen blanket and heated. Water is removed during the esterification. The reaction is run at a maximum temperature of 215°C under nitrogen sparging. When the acid number drops below 20 mg KOH/gram catalyst is added (Fascat 4102, 0.03 parts) and the reaction is continued until the acid number is below 1 mg KOH/gram. At the end of the reaction the product is cooled down to 90°C and drummed off.

### Synthesis of Urethane acrylate

The urethane acrylate gel coat resin of this example contains a saturated butanediol-adipate. As in Example 1, this product is reacted with IPDI and HEA to produce a urethane polyester copolymer having acrylic unsaturation at the terminal positions. The resin of Example 2 is prepared in a manner essentially identical to Example 1.

### Example 3 : coating and curing

A composite material (non-woven glass fibre and unsaturated polyester) is coated with a primer by wet spray with 150g/m². The composition of the primer is shown in the table below :

| Primer formulation | pbw |
|---|---|
| EBECRYL 524/EBECRYL 113 6/4 | 100 |
| XL 6507 | 0.5 |
| BYK 346 | 0.5 |
| Photoinitiator blend 50/50 %wt benzophenone/1-hydroxycyclohexyl-phenyl-ketone | 2 |
| **TPO// TPO-L** | 2 |
| Pigment MB | 4 |
| Desmodur 3900 | 10 |

EBECRYL 524 and 113 were obtained from allnex. As an alternative EBECRYL 571 and 741 can also be used, each time diluted with EBECRYL 113.

This primer was then dried at 60°C and UV-cured at 6m/min with a 80 W Ga+Hg UV source.

Once cured, the topcoat is applied at a thickness of 20 to 40 gram/m² with a roller coater. The three formulations are shown below.

| Formulations (parts in weight) | A | B* | C |
|---|---|---|---|
| Example 1 | 100 | | 100 |
| Example 2* (Comparative) | | 100 | |
| 1,6-hexanedioldiacrylate | 42 | 42 | 42 |
| Tinuvin 292 | 0.5 | 0.5 | 1 |
| Tinuvin 1130 | 0.5 | 0.5 | 2 |
| Tego glide 100 | 0.5 | 0.5 | 0.5 |
| XL 6507 | 1 | 1 | 1 |
| MBF | 4 | 4 | 4 |
| Desmodur 3900 | 5 | 5 | 5 |

It was then cured at 6m/min with first a 80W Ga+Hg light source followed by a 120W Hg light source. This resulted in a clear finish that has a high gloss.

### Example 4: Exposing of the articles of Example 3 to a Xenon light

The coating of Example 3 has been subjected to xenon weathering testing (including water spray) according to EN ISO 16474-2, method A, cycle 1, for a total testing time of almost 3000 hours. After 738, 1231, 1739, 2239 and 2739 hours of xenon-testing had been completed, the coating has been optically analysed. Up to 2739 hours of testing, no visible defects could be observed and gloss levels at 20 and 60° remained at high level for formulation A and C. The coating was still intact. For formulation B*(comparative) gloss level dropped faster and cracks appeared after 2239 hours.

This testifies of the excellent weathering resistance of the coating according this embodiment of the present invention.

| Formulations (parts in weight) | A | B* | C |
|---|---|---|---|
| Example 1 | 100 | | 100 |
| Example 2* (comparative) | | 100 | |
| 1,6-hexanedioldiacrylate | 42 | 42 | 42 |
| Tinuvin 292 | 0.5 | 0.5 | 1 |
| Tinuvin 1130 | 0.5 | 0.5 | 2 |
| Tego glide 100 | 0.5 | 0.5 | 0.5 |
| Additol XL 6507 | 1 | 1 | 1 |
| MBF | 4 | 4 | 4 |
| Desmodur 3900 | 5 | 5 | 5 |

### Testing results :

| Formulation | Before Xenon test | 738 hours Xenon | 1231 hours Xenon | 1739 hours Xenon | 2239 hours Xenon | 2739 hours xenon |
|---|---|---|---|---|---|---|
| | Gloss 20°/60° | Gloss 20°/60° | Gloss 20°/60° | Gloss 20°/60° | Gloss 20°/60° | Gloss 20°/60° |
| A | 83/91 | 82/90 | 83/90 | 83/89 | 72/87 | 73/87 |
| B* | 80/89 | 78/84 | 76/85 | 71/84 | 65/83* (Cracks) | |
| C | 81/90 | 83/89 | 81/88 | 74/87 | 73/87 | 73/87 |

### Example 5:

The resin from Example 1 was used in a gel coat formulation indicated in the following table.

| | pbw |
|---|---|
| Example 1 | 60 |
| HDDA | 40 |
| Tinuvin 1130 | 2 |
| Tinuvin 292 | 1 |
| Additol Lambda | 0.5 |
| Additol XL 6507 | 0.5 |
| Pigment MB | 4 |
| TPO-L | 2 |

This formulation was applied on a PET film using a bar coater with a film thickness of 150 µm and cured at 5 m/min with first a 80W Ga light source. Then 300 µm of a mixture VIAPAL 4714 BET/52 (Unsaturated polyester available from allnex) with 4 ppw Curox-I 300 (peroxide available from Nurion) was applied using a bar coater. 3 layers of woven glass fiber was applied followed by a second 300 µm layer of the mixture VIAPAL 4714 BET/52 with 4 ppw Curox-I 300 (Methyl isobutyl ketone peroxide available from United Initiators). Finally a second PET foil is applied and the buildup is compressed using a rubber roller. The composite is subsequently cured for 1 hour at 70°C.

This procedure resulted in a white, high gloss finish of the composite matrix material. The coating of Example 5 has been subjected to xenon weathering testing (including water spray) according to EN ISO 16474-2, method A, cycle 1, for a total testing time of almost 3000 hours. Also for this formulation an excellent weathering resistance of the coating according was achieved.

## Claims

1. A radiation curable gel coat composition for fibers reinforced substrates, comprising a gel coat resin and at least one diluent monomer (B),
wherein the gel coat resin comprises urethane (meth)acrylate reaction products (A) of a reaction mixture comprising:
(a) a hydroxy-terminated polyol having a weight average molecular weight of 200 to 4000, this polyol being a polycaprolactone polyol, or a [(poly)carbonate-(poly)caprolactone]polyol;
(b) a diisocyanate; and
(c) a hydroxyalkyl (meth)acrylate,
wherein the polycaprolactone polyol is prepared from reacting one or more saturated polyol(s) with ε-caprolactone, wherein the saturated polyol is an alkyl polyol;
wherein the [(poly)carbonate-(poly)caprolactone]polyol is prepared from reacting one or more saturated polyol(s) with ε-caprolactone, wherein the saturated polyol is a polycarbonatediol;
and wherein both the diluent monomer (B) and the reaction product (A) contain polymerizable ethylenic unsaturated groups, preferably (meth)acrylate groups.

2. A composition according to claim 1, wherein compound (a) has a weight average molecular weight of 500 to 3000.

3. A composition according to any preceding claim, wherein a reaction mixture of (a), (b), and (c) contains a molar ratio of 0.75 to 1.25 mole (a) to 1.5 to 2.5 moles (b) to 1.5 to 2.5 moles (c), preferably a molar ratio of 0.9 to 1.1 mole (a) to 1.7 to 2.2 moles (b) to 1.7 to 2.2 moles (c), more preferably a molar ratio of 0.95 to 1.05 mole (a) to 1.7 to 2 moles (b) to 1.7 to 2 moles (c).

4. A composition according to any preceding claim, wherein compound (b) comprises an aliphatic diisocyanate and optionally up to 20% of an aromatic diisocyanate, by total weight of the diisocyanate, the aliphatic diisocyanate comprising preferably 1,6-hexamethylene diisocyanate, isophorone diisocyanate, 2,4'-dicyclohexylmethane diisocyanate, and/or 4,4'-dicyclohexylmethane diisocyanate more preferably isophorone diisocyanate (IPDI).

5. A composition according to any preceding claim, wherein compound (c) has a structure
CH₂=C(R¹)-C(=O)-O-R²-OH
wherein R¹ is hydrogen or methyl and R² is a C1 to C6 alkylene group or an arylene group, preferably
2-hydroxyethyl methacrylate, 2-hydroxyethyl acrylate, 2-hydroxypropyl methacrylate, or 3-hydroxypropyl methacrylate, more preferably 2-hydroxyethyl acrylate (HEA).

6. A composition according to any preceding claim wherein the polycaprolactonepolyol comprises a reaction of product of (i) neopentyl glycol, 1,6-hexanediol, or a mixture thereof, and (ii) ε-caprolactone.

7. A composition according to any preceding claim, wherein the urethane (meth)acrylate is present in the gel coat resin composition in an amount of 20% to 80%, preferably 30 to 70% by weight, of the composition.

8. A composition according to any preceding claim, further comprising a pigment.

9. A composition according to any preceding claim wherein the diluent monomer comprises a (meth) acrylate monomer, preferably difunctional or trifunctional, more preferably isobornyl(meth)acrylate, hexanediol di(meth)acrylate, trimethylolpropanetri(meth)acrylate or a mixture thereof.

10. A cured gel coat prepared by curing a gel coat composition according to any preceding claim.

11. A cured gel coat according to claim 10 wherein the composition contains a photoinitiator and is cured by ultraviolet radiation.

12. A cured gel coat according to claim 10 wherein the composition is cured by electronbeam.

13. A cured gel coat according to claim 10 wherein the composition contains a peroxide and is peroxide cured.

14. An article of manufacture having an exterior gel coat prepared by curing a gel coat composition according to any of claims 1 to 9.

15. A gel coat composition comprising a gel coat resin and at least one diluent monomer, wherein the gel coat resin comprises urethane(meth)acrylate reaction product made by a process comprising the steps of
(a) preparing a hydroxy-terminated polycaprolactonepolyol and/or a hydroxy-terminated [(polycaprolactone)(polycarbonate)]polyol having a weight average molecular weight of 200 to 4000 by reacting (i) a saturated diol and optional saturated polyol with ε-caprolactone and/or carbonate reactant, in sufficient relative amounts of (i) and (ii) to provide terminal hydroxy groups;
(b) adding a hydroxyalkyl (meth)acrylate to the hydroxy-terminated polyol of step (a) to form a prereaction mixture;
(c) then adding a diisocyanate to the prereaction mixture of step (b) to form a reaction mixture; and
(d) maintaining the reaction mixture of step (c) at a sufficient temperature for a sufficient time to react essentially all isocyanate moieties of the diisocyanate and yield the urethane acrylate gel coat resin.

## Patentansprüche

1. Strahlungshärtbare Gelschichtzusammensetzung für faserverstärkte Substrate, umfassend ein Gelschichtharz und mindestens ein Verdünnungsmittelmonomer (B),
wobei das Gelschichtharz Urethan(meth)acrylat-Reaktionsprodukte (A) eines Reaktionsgemisches umfasst, das:
(a) ein hydroxy-terminiertes Polyol mit einem gewichtsmittleren Molekulargewicht von 200 bis 4.000, wobei dieses Polyol ein Polycaprolactonpolyol oder ein [(Poly)carbonat-(poly)caprolacton]polyol ist;
(b) ein Diisocyanat und
(c) ein Hydroxyalkyl(meth)acrylat
umfasst,
wobei das Polycaprolactonpolyol durch Umsetzen eines oder mehrerer gesättigter Polyole mit ε-Caprolacton hergestellt wird, wobei das gesättigte Polyol ein Alkylpolyol ist;
wobei das [(Poly)carbonat-(poly)caprolacton]polyol durch Umsetzen eines oder mehrerer gesättigter Polyole mit ε-Caprolacton hergestellt wird, wobei das gesättigte Polyol ein Polycarbonatdiol ist; und
wobei sowohl das Verdünnungsmittelmonomer (B) als auch das Reaktionsprodukt (A) polymerisierbare ethylenisch ungesättigte Gruppen, vorzugsweise (Meth)acrylatgruppen enthalten.

2. Zusammensetzung nach Anspruch 1, wobei Verbindung (a) ein gewichtsmittleres Molekulargewicht von 500 bis 3.000 hat.

3. Zusammensetzung nach einem vorstehenden Anspruch, wobei ein Reaktionsgemisch aus (a), (b) und (c) ein Molverhältnis von 0,75 bis 1,25 Mol (a) zu 1,5 bis 2,5 Mol (b) zu 1,5 bis 2,5 Mol (c), vorzugsweise ein Molverhältnis von 0,9 bis 1,1 Mol (a) zu 1,7 bis 2,2 Mol (b) zu 1,7 bis 2,2 Mol (c), stärker bevorzugt ein Molverhältnis von 0,95 bis 1,05 Mol (a) zu 1,7 bis 2 Mol (b) zu 1,7 bis 2 Mol (c) enthält.

4. Zusammensetzung nach einem vorstehenden Anspruch, wobei Verbindung (b) ein aliphatisches Diisocyanat und gegebenenfalls bis zu 20 % eines aromatischen Diisocyanats, bezogen auf das Gesamtgewicht des Diisocyanats, umfasst, wobei das aliphatische Diisocyanat vorzugsweise 1,6-Hexamethylendiisocyanat, Isophorondiisocyanat, 2,4'-Dicyclohexylmethandiisocyanat und/oder 4,4'-Dicyclohexylmethandiisocyanat, stärker bevorzugt Isophorondiisocyanat (IPDI) umfasst.

5. Zusammensetzung nach einem vorstehenden Anspruch, wobei Verbindung (c) die Struktur
CH₂=C(R¹)-C(=O)-O-R²-OH
aufweist, wobei R¹ Wasserstoff oder Methyl ist und R² eine C1- bis C6-Alkylengruppe oder eine Arylengruppe, vorzugsweise 2-Hydroxyethylmethacrylat, 2-Hydroxyethylacrylat, 2-Hydroxypropylmethacrylat oder 3-Hydroxypropylmethacrylat, stärker bevorzugt 2-Hydroxyethylacrylat (HEA) ist.

6. Zusammensetzung nach einem vorstehenden Anspruch, wobei das Polycaprolactonpolyol ein Reaktionsprodukt von (i) Neopentylglycol, 1,6-Hexandiol oder einem Gemisch davon und und (ii) ε-Caprolacton umfasst.

7. Zusammensetzung nach einem vorstehenden Anspruch, wobei das Urethan(meth)acrylat in der Gelschichtharzzusammensetzung in einer Menge von 20 Gew.-% bis 80 Gew.-%, vorzugsweise 30 bis 70 Gew.-% der Zusammensetzung vorliegt.

8. Zusammensetzung nach einem vorstehenden Anspruch, ferner umfassend ein Pigment.

9. Zusammensetzung nach einem vorstehenden Anspruch, wobei das Verdünnungsmittelmonomer ein (Meth)acrylatmonomer, vorzugsweise difunktionell oder trifunktionell, stärker bevorzugt Isobornyl(meth)acrylat, Hexandioldi(meth)acrylat, Trimethylolpropantri(meth)acrylat oder ein Gemisch davon umfasst.

10. Gehärtete Gelschicht, hergestellt durch Härten einer Gelschichtzusammensetzung nach einem vorstehenden Anspruch.

11. Gehärtete Gelschicht nach Anspruch 10, wobei die Zusammensetzung einen Photoinitiator enthält und durch ultraviolette Strahlung gehärtet wurde.

12. Gehärtete Gelschicht nach Anspruch 10, wobei die Zusammensetzung mit Elektronenstrahlen gehärtet wurde.

13. Gehärtete Gelschicht nach Anspruch 10, wobei die Zusammensetzung ein Peroxid enthält und mit Peroxid gehärtet wurde.

14. Fertigungsgegenstand mit einer äußeren Gelschicht, hergestellt durch Härten einer Gelschichtzusammensetzung nach einem der Ansprüche 1 bis 9.

15. Gelschichtzusammensetzung, umfassend ein Gelschichtharz und mindestens ein Verdünnungsmittelmonomer, wobei das Gelschichtharz ein Urethan(meth)acrylat-Reaktionsprodukt umfasst, das durch ein Verfahren gefertigt wurde, das die folgenden Schritte umfasst
(a) Herstellen eines hydroxy-terminierten Polycaprolactonpolyols und/oder eines hydroxy-terminierten [(Polycaprolacton)(polycarbonat)]polyols mit einem gewichtsmittleren Molekulargewicht von 200 bis 4.000 durch Umsetzen (i) eines gesättigten Diols und gegebenenfalls gesättigten Polyols mit ε-Caprolacton und/oder einem Carbonat-Reaktanten in ausreichenden relativen Mengen von (i) und (ii), um terminale Hydroxygruppen bereitzustellen;
(b) Zugeben eines Hydroxyalkyl(meth)acrylats zu dem hydroxy-terminierten Polyol von Schritt (a) unter Bildung eines Vorreaktionsgemisches;
(c) dann Zugeben eines Diisocyanats zu dem Vorreaktionsgemisch von Schritt (b) unter Bildung eines Reaktionsgemisches; und
(d) Halten des Reaktionsgemisches von Schritt (c) bei einer ausreichenden Temperatur für eine ausreichende Zeit, um im Wesentlichen alle Isocyanateinheiten des Diisocyanats umzusetzen und das Urethanacrylat-Gelschichtharz zu erhalten.

## Revendications

1. Composition d'enduit gélifié durcissable par rayonnement pour des substrats renforcés par des fibres, comprenant une résine d'enduit gélifié et au moins un monomère diluant (B),
dans laquelle la résine d'enduit gélifié comprend les produits de réaction de (méth)acrylate d'uréthane (A) d'un mélange réactionnel comprenant :
(a) un polyol à terminaison hydroxy ayant un poids moléculaire moyen en poids de 200 à 4 000, ce polyol étant un polycaprolactone polyol, ou un [(poly)carbonate-(poly)caprolactone]polyol ;
(b) un diisocyanate ; et
(c) un (méth)acrylate d'hydroxyalkyle,
dans laquelle le polycaprolactone polyol est préparé par mise en réaction d'un ou plusieurs polyol(s) saturé(s) avec l'E-caprolactone, dans laquelle le polyol saturé est un alkylpolyol ;
dans laquelle le [(poly)carbonate-(poly)caprolactone]polyol est préparé par mise en réaction d'un ou plusieurs polyol(s) saturé(s) avec l'ε-caprolactone, le polyol saturé étant un polycarbonatediol ;
et dans laquelle à la fois le monomère diluant (B) et le produit de réaction (A) contiennent des groupes éthyléniques insaturés polymérisables, de préférence des groupes (méth)acrylate.

2. Composition selon la revendication 1, dans laquelle le composé (a) a un poids moléculaire moyen en poids de 500 à 3 000.

3. Composition selon l'une quelconque des revendications précédentes, dans laquelle un mélange réactionnel de (a), (b) et (c) contient un rapport molaire de 0,75 à 1,25 mole (a) sur 1,5 à 2,5 moles (b) sur 1,5 à 2,5 moles (c), de préférence un rapport molaire de 0,9 à 1,1 mole (a) sur 1,7 à 2,2 moles (b) sur 1,7 à 2,2 moles (c), plus préférablement un rapport molaire de 0,95 à 1,05 mole (a) sur 1,7 à 2 moles (b) sur 1,7 à 2 moles (c).

4. Composition selon l'une quelconque des revendications précédentes, dans laquelle le composé (b) comprend un diisocyanate aliphatique et éventuellement jusqu'à 20 % d'un diisocyanate aromatique, en poids total du diisocyanate, le diisocyanate aliphatique comprenant de préférence le diisocyanate de 1,6-hexaméthylène, le diisocyanate d'isophorone, le diisocyanate de 2,4'-dicyclohexylméthane et/ou le diisocyanate de 4,4'-dicyclohexylméthane, plus préférablement le diisocyanate d'isophorone (IPDI).

5. Composition selon l'une quelconque des revendications précédentes, dans laquelle le composé (c) a une structure
CH₂=C(R¹)-C(=O)-O-R²-OH
dans laquelle R¹ est hydrogène ou méthyle et R² est un groupe alkylène en C1 à C6 ou un groupe arylène, de préférence
méthacrylate de 2-hydroxyéthyle, acrylate de 2-hydroxyéthyle, méthacrylate de 2-hydroxypropyle ou méthacrylate de 3-hydroxypropyle, plus préférablement acrylate de 2-hydroxyéthyle (HEA).

6. Composition selon l'une quelconque des revendications précédentes, dans laquelle le polycaprolactonepolyol comprend un produit de réaction de (i) néopentylglycol, 1,6-hexanediol, ou un mélange de ceux-ci, et (ii) E-caprolactone.

7. Composition selon l'une quelconque des revendications précédentes, dans laquelle le (méth)acrylate d'uréthane est présent dans la composition de résine d'enduit gélifié en une quantité de 20 % à 80 %, de préférence de 30 à 70 % en poids, de la composition.

8. Composition selon l'une quelconque des revendications précédentes, comprenant en outre un pigment.

9. Composition selon l'une quelconque des revendications précédentes, dans laquelle le monomère diluant comprend un monomère de (méth)acrylate, de préférence difonctionnel ou trifonctionnel, plus préférablement un (méth)acrylate d'isobornyle, un di(méth)acrylate d'hexanediol, un tri(méth)acrylate de triméthylolpropane ou un mélange de ceux-ci.

10. Enduit gélifié durci préparé par durcissement d'une composition d'enduit gélifié selon l'une quelconque des revendications précédentes.

11. Enduit gélifié durci selon la revendication 10, dans lequel la composition contient un photoinitiateur et est durcie par rayonnement ultraviolet.

12. Enduit gélifié durci selon la revendication 10, dans lequel la composition est durcie par un faisceau d'électrons.

13. Enduit gélifié durci selon la revendication 10, dans lequel la composition contient un peroxyde et est durcie par un peroxyde.

14. Article de fabrication ayant un enduit gélifié extérieur préparé par durcissement d'une composition d'enduit gélifié selon l'une quelconque des revendications 1 à 9.

15. Composition d'enduit gélifié comprenant une résine d'enduit gélifié et au moins un monomère diluant, dans laquelle la résine d'enduit gélifié comprend un produit de réaction d'uréthane(méth)acrylate préparé par un procédé comprenant les étapes de
(a) préparation d'un polycaprolactonepolyol à terminaison hydroxy et/ou d'un [(polycaprolactone) (polycarbonate)]polyol à terminaison hydroxy ayant un poids moléculaire moyen en poids de 200 à 4 000 par mise en réaction de (i) un diol saturé et un polyol éventuellement saturé avec un réactif de E-caprolactone et/ou de carbonate, en des quantités relatives suffisantes de (i) et (ii) pour fournir des groupes hydroxy terminaux ;
(b) ajout d'un (méth)acrylate d'hydroxyalkyle au polyol à terminaison hydroxy de l'étape (a) pour former un mélange de préréaction ;
(c) ensuite ajout d'un diisocyanate au mélange de préréaction de l'étape (b) pour former un mélange réactionnel ; et
(d) maintien du mélange réactionnel de l'étape (c) à une température suffisante pendant une durée suffisante pour faire réagir essentiellement tous les groupements isocyanate du diisocyanate et donner la résine d'enduit gélifié d'acrylate d'uréthane.
